# EUROPÄISCHE PATENTSCHRIFT

(11) **EP 2 932 142 B1**
(45) Veröffentlichungstag und Bekanntmachung des Hinweises auf die Patenterteilung: **09.06.2021**
(21) Anmeldenummer: 13815380.4
(22) Anmeldetag: 16.12.2013
(51) Int. Cl.: F16K 11/076

(54) **MEHRWEGEMISCHVENTIL UND VERFAHREN ZUM ZEITLICHEN STEUERN EINES MEHRWEGEMISCHVENTILS**
MULTIPLE-WAY MIXING VALVE AND METHOD FOR CONTROLLING A MULTIPLE-WAY MIXING VALVE OVER TIME
VANNE MÉLANGEUSE MULTIVOIE ET PROCÉDÉ DE COMMANDE TEMPORELLE D'UNE VANNE MÉLANGEUSE MULTIVOIE

(30) Priorität: 17.12.2012 DE 102012024585
(43) Veröffentlichungstag der Anmeldung: 21.10.2015
(73) Patentinhaber: Meibes System-Technik GmbH, 04827 Gerichshain (DE)
(72) Erfinder: SCHULZ, Swen, 04838 Eilenburg (DE); DUDZIAK, Ronny, 04347 Leipzig (DE); PROSCHE, Tobias, 04416 Markkleeberg (DE)
(74) Vertreter: Hecht, Jan-David
(86) Internationale Anmeldenummer: PCT/EP2013/003787
(87) Internationale Veröffentlichungsnummer: WO 2014/095021

(56) Entgegenhaltungen:
- WO-A1-2006/109639
- DE-A1- 19 614 868
- US-A- 5 927 330

## Beschreibung

Die vorliegende Erfindung betrifft ein Mehrwegemischventil nach dem Oberbegriff von Anspruch 1 und ein Verfahren zum zeitlichen Steuern nach dem Oberbegriff von Anspruch 10.

Mehrwegemischventile kommen in vielen hydraulischen Schaltungen zum Einsatz und werden vor allem in Warmwasserbereitungs- und/oder Heizungssystemen eingesetzt.

Bekannt ist beispielsweise aus der DE 102 42 727 A1 ein Mehrwegemischventil, bei dem in einer Schaltungsebene in Bezug auf die Drehachse eines Schaltelementes gegenüberliegend zwei Ablaufanschlüsse angeordnet sind und senkrecht dazu parallel zur Drehachse ein Zulaufanschluss. Das Schaltelement weist einen in Drehachse ausgerichteten Axialströmungskanal auf, der mit drei um 120° versetzt angeordneten Radialströmungskanälen kommuniziert, die in der Schaltungsebene der Abläufe angeordnet sind. Durch die besondere 120°-Anordnung der Radialströmungskanäle lässt sich ein besonders schnelles Schalten des Zulaufes wahlweise mit einem der beiden Abläufe erreichen.

Aus der DE 102 14 242 A1 ist ein Mehrwegemischventil bekannt, bei dem ein Ventilgehäuse Verwendung findet, das Kreuzform aufweist, wobei im Mittelpunkt des Kreuzes und an allen Enden des Kreuzes Strömungsmittelkanäle vorgesehen sind, die über ein im Kreuzungsmittelpunkt angeordnetes Schaltelement miteinander verbindbar sind. Zusätzlich ist vorgesehen, dass zwei der Strömungsmittelkanäle unmittelbar über einen Bypass miteinander und auch gemeinsam mit dem Schaltelement kommunizieren. Hierdurch wird eine einfache Ansteuerung zweier Wärmesenken über eine einzelne Wärmequelle ermöglicht.

Eine mehrkreisige Heizungsanlage mit zwei Wärmesenken, die über einen Mischverteiler mit einer Wärmequelle verbunden sind, ist aus der DE 10 2008 013 124 A1 bekannt. Hierbei kommt ein Vierwegeventil zum Einsatz.

Die US 5,927,330 A zeigt ein Rotationsschaltventil, bei dem aus einer Vielzahl von Zuleitungen eine gemeinsame Ableitung gespeist wird und ein oder mehrere der Zuleitungen ausgewählt werden können, um den Medienstrom einer Analyseleitung zuzuführen. Solche Ventile werden in der Erdöl- und Erdgasförderung eingesetzt.

Die DE 196 14 868 A1 offenbart einen Ventilschieber für eine elektro-hydraulische Getriebesteuerung eines Automatikgetriebes, bei dem verschiedene Schaltebenen vorliegen.

Die WO 2006/109639 A1 offenbart einen Mehrfachverteiler mit mehreren Anschlüssen in verschiedenen Schaltebenen, der für Anlagen für die Druckwechsel-Adsorption zur physikalischen Trennung von Gasgemischen unter Druck mittels Adsorption verwendet wird.

Die Aufgabe der vorliegenden Erfindung besteht darin, ein Mehrwegemischventil zur Verfügung zu stellen, mit dem es möglich ist, mehr als zwei Wärmesenken mit einer Wärmequelle zu verbinden. Insbesondere soll es mit einem solchen Mehrwegemischventil möglich sein, einen Warmwasserspeicher ggf. auch in einen Mischkreislauf einzubinden und dabei zweckmäßigerweise eine Vorrangschaltung hinsichtlich des Warmwasserspeichers zu ermöglichen.

Diese Aufgabe wird gelöst mit dem erfindungsgemäßen Mehrwegemischventil nach Anspruch 1 und einem Verfahren zum zeitlichen Steuern nach Anspruch 10. Vorteilhafte Weiterbildungen sind in den abhängigen Unteransprüchen angegeben.

Die Erfinder haben erkannt, dass die gestellte Aufgabe dadurch konstruktiv besonders einfach gelöst werden kann, wenn zumindest fünf Anschlüsse für das Mehrwegemischventil bereitgestellt werden, die über ein im Ventilgehäuse gelagertes Schaltelement, das Strömungskanäle aufweist, miteinander verbindbar sind, wobei drei erste Anschlüsse einer ersten Schaltebene des Schaltelementes zugeordnet sind und zwei zweite Anschlüsse einer oder mehreren von der ersten Ebene abweichenden zweiten Schaltebene des Schaltelementes zugeordnet sind.

Vorteilhaft sind die ersten drei Anschlüsse um 90° versetzt zueinander in der ersten Schaltebene angeordnet, wodurch sich zwischen unterschiedlichen Mischzuständen kurze Schaltwege ergeben.

Wenn zumindest einer der zweiten Anschlüsse in Bezug auf die Projektion der ersten Schaltebene nicht mit einem der drei ersten Anschlüsse fluchtet, insbesondere um 90° versetzt zu den drei ersten Anschlüssen angeordnet ist, lässt sich eine Vorrangschaltung besonders einfach umsetzen.

Zweckmäßig sind die zweiten Anschlüsse in einer einheitlichen zweiten Schaltungsebene des Schaltelementes angeordnet. Dann lässt sich das Mehrwegemischventil besonders kompakt gestalten. Alternativ ist es natürlich auch möglich, die zweiten Anschlüsse in unterschiedlichen zweiten Schaltungsebenen des Schaltelementes anzuordnen, wodurch die entsprechenden Anschlüsse besser versetzt zueinander angeordnet werden können, um gegebenenfalls Vorteile bezüglich der Einbausituation zu erzielen.

Besonders bevorzugt ist es, wenn das Schaltelement bereichsweise Vertiefungen gegenüber dem Ventilgehäuse aufweist, die bevorzugt musterartig angeordnet und insbesondere in Form von Parallelogrammen ausgebildet sind.

Alternativ oder zusätzlich kann das Schaltelement auch eine Beschichtung zur Reibungsverminderung aufweisen, wobei die Beschichtung bevorzugt einen synthetischen Kautschuk aufweist und insbesondere als Ethylen-Propylen-Dien-Kautschuk (EPDM) ausgebildet ist. Dadurch wird zum einen verhindert, dass eine reibungsbedingte Abnutzung auftritt und zum anderen ist auch kein Ringspalt zur Drehung des Schaltelementes im Ventilgehäuse mehr nötig, was bei aus dem Stand der Technik bekannten Modellen zu einem Überlauf zwischen nicht miteinander verschalteten Anschlüssen führen konnte. Die für einen solchen Überlauf erforderlichen Druckerhöhungen sind insbesondere bei Heizkreisen möglich, da die Wärmequelle zur Betriebsaufrechterhaltung in regelmäßigen Abständen gestartet wird.

Alternativ oder zusätzlich können auch Dichtelemente um die Anschlüsse und/oder um die Strömungskanäle angeordnet sein, die auch unter Druck einen Überlauf zwischen nicht verschalteten Anschlüssen verhindern. Hierfür kommen bevorzugt O-Ringe oder Zylindereinsätze aus PTFE (Polytetrafluorethylen) in Frage.

In einer besonders bevorzugten Ausgestaltung sind mindestens zwei erste Strömungskanäle den drei ersten Anschlüssen zugeordnet, wobei die Strömungskanäle so ausgebildet sind, dass sie jeweils zwei der drei ersten Anschlüsse gleichzeitig überdecken können. Dadurch wird ein gradueller Übergang zwischen benachbarten Schaltzuständen ermöglicht. Alternativ kann auch ein einzelner Strömungskanal vorgesehen sein, der so ausgebildet ist, dass er gleichzeitig die drei ersten Anschlüsse gleichzeitig überdecken kann. Vorzugsweise sind die zwei Strömungskanäle bzw. der eine Strömungskanal als Langlöcher ausgebildet. In einer zweckmäßigen Ausgestaltung ist das Schaltelement als ggf. ein- oder beidseitig geschlossenes hohlzylindrisches Element ausgebildet oder alternativ als zwei miteinander verbundene kugelschalenartige Elemente.

Vorteilhaft sind zumindest einem Anschluss zwei zweite Strömungskanäle zugeordnet, wobei der Anschluss zumindest in einer Schalterstellung des Schaltelementes mit beiden Strömungskanälen gleichzeitig kommuniziert, wobei die beiden Strömungskanäle bevorzugt in einer Stirnfläche des Schaltelementes angeordnet sind. Durch diese Ausgestaltung kann eine präzise Sperrung dieses Anschlusses erreicht werden und gleichzeitig dennoch ein hoher Fluiddurchsatz in der zugeschalteten Stellung erreicht werden.

In diesem Zusammenhang ist es wünschenswert, dass die beiden Strömungskanäle in Summe zumindest dieselbe Querschnittsfläche aufweisen wie die Querschnittsfläche zumindest eines der ersten Anschlüsse, die bevorzugt jeweils dieselben Querschnittsflächen aufweisen. Dadurch werden unterschiedliche hydraulische Anschlusswiderstände des Mehrwegemischventils in Bezug auf die unterschiedlichen Schaltzustände des Ventils vermieden.

Erfindungsgemäß ist das Schaltelement im Zusammenhang mit den Anschlüssen so ausgebildet, dass durch Drehen des Schaltelementes um zumindest einen Winkelbereich einer Drehachse folgende Mischzustände angesteuert, bevorzugt sukzessive angesteuert werden können:
a) Verbinden eines ersten der ersten Anschlüsse mit einem zweiten der ersten Anschlüsse,
b) gleichzeitige Verbindung des ersten der ersten Anschlüsse mit dem zweiten der ersten Anschlüsse und eines ersten der zweiten Anschlüsse mit dem zweiten der ersten Anschlüsse,
c) Verbinden des ersten der zweiten Anschlüsse mit dem zweiten der ersten Anschlüsse,
d) gleichzeitiges Verbinden des ersten der zweiten Anschlüsse mit dem zweiten der ersten Anschlüsse und eines dritten der ersten Anschlüsse mit dem zweiten der ersten Anschlüsse,
e) Verbinden des dritten der ersten Anschlüsse mit dem zweiten der ersten Anschlüsse und
f) Verbinden des dritten der ersten Anschlüsse mit einem zweiten der zweiten Anschlüsse,
wobei für das Schaltelement eine erste Anschlagstellung ausgebildet ist, in der der Mischzustand a) vorliegt, und/oder eine zweite Anschlagstelle ausgebildet ist, in der der Mischzustand f) vorliegt, wobei die erste und zweite Anschlagstellung insbesondere über Endlagenschalter eines das Schaltelement antreibenden Motors verwirklicht sind. Auf diese Art und Weise lässt sich konstruktiv sehr einfach eine Verschaltung von drei Wärmesenken mit einer Wärmequelle erzielen, wobei sich beispielsweise mit der Mischzustand f) eine Vorrangschaltung zur ausschließlichen Beschickung eines Wärmespeichers verwirklichen lässt, wobei in diesem Fall keine Zumischung zu den anderen Wärmesenken vorgenommen wird.

In einer vorteilhaften Weiterbildung dieser Ausgestaltung ist vorgesehen, dass der Drehwinkel des Schaltelementes zwischen den der Mischzuständen a) und f) insgesamt 135° beträgt, und bevorzugt ein Drehwinkel zwischen den der Mischzuständen a) und e) von 90° und ein Drehwinkel zwischen den der Mischzuständen e) und f) von 45° vorgesehen sind. Durch diese besondere Ausgestaltung wird erreicht, dass sehr schnell zwischen den verschiedenen Mischzuständen a) bis e) gewechselt werden kann und außerdem ein großer Einstellbereich für die Vorrangschaltung vorgesehen ist. Da bei einem Wechsel von Mischzustand e) hin zu der Mischzustand f) wie auch bei allen anderen der Mischzustandswechseln die Strömungskanäle die jeweiligen Anschlüsse jeweils nicht sofort vollständig überdecken, ist so eine sehr kontrollierte Dosierung des Fluidstromes in der Vorrangschaltung möglich.

Unabhängiger Schutz wird beansprucht für das erfindungsgemäße Verfahren zum zeitlichen Steuern der Verbindung von fünf Fluid führenden Anschlüssen untereinander, insbesondere den Anschlüssen des erfindungsgemäßen Mehrwegemischventils, das die folgenden möglichen Schritte beinhaltet:
h) Verbinden eines ersten der ersten Anschlüsse mit einem zweiten der ersten Anschlüsse,
i) gleichzeitige Verbindung des ersten der ersten Anschlüsse mit dem zweiten der ersten Anschlüsse und eines ersten der zweiten Anschlüsse mit dem zweiten der ersten Anschlüsse,
k) Verbinden des ersten der zweiten Anschlüsse mit dem zweiten der ersten Anschlüsse,
1) gleichzeitiges Verbinden des ersten der zweiten Anschlüsse mit dem zweiten der ersten Anschlüsse und eines dritten der ersten Anschlüsse mit dem zweiten der ersten Anschlüsse,
m) Verbinden des dritten der ersten Anschlüsse mit dem zweiten der ersten Anschlüsse und
n) Verbinden des dritten der ersten Anschlüsse mit einem zweiten der zweiten Anschlüsse.

Wenn der zweite Anschluss der ersten Anschlüsse dann beispielsweise mit dem Vorlauf eines gemischten Heizkreises verbunden ist, wird dieser Heizkreis stets betrieben und je nach Anforderung kann bedarfsweise Wärme zugemischt werden von einer Heizquelle, einem ungemischten Heizkreis oder ggf. von einem Pufferspeicher. Mit Schritt n) kann so eine Vorrangschaltung beispielsweise für die Warmwasseraufbereitung bzw. die Pufferspeicherbeladung verwirklicht werden, bei der kein Betrieb des gemischten Heizkreises erfolgt.

Die Merkmale der erfindungsgemäßen Gegenstände und weitere Vorteile werden im Folgenden anhand der Beschreibung bevorzugter Ausführungsbeispiele im Zusammenhang mit den Figuren deutlich werden. Dabei zeigen:
- Fig. 1: das erfindungsgemäße Mehrwegemischventil in einer ersten bevorzugten Ausgestaltung in einer perspektivischen Ansicht,
- Fig. 2a bis 2d: das erfindungsgemäße Mehrwegemischventil nach Fig. 1 in teilweise transparenten perspektivischen Darstellungen,
- Fig. 3: einen Schnitt durch das erfindungsgemäße Mehrwegemischventil nach Fig. 1,
- Fig. 4: das erfindungsgemäße Mehrwegemischventil in einer zweiten bevorzugten Ausgestaltung in einer perspektivischen Ansicht,
- Fig. 5a bis 5c: das erfindungsgemäße Mehrwegemischventil nach Fig. 4 in teilweise transparenten perspektivischen Ansichten,
- Fig. 6a bis 6c: das erfindungsgemäße Mehrwegemischventil nach Fig. 4 in Schnittansichten,
- Fig. 7: eine Übersicht über die mit dem erfindungsgemäßen Mehrwegemischventil ermöglichten Mischzustände
- Fig. 8a, 8b: das erfindungsgemäße Mehrwegemischventil nach Fig. 1 in einer teilweisen Explosionsdarstellung, und zwar in einer perspektivischen Ansicht und einer Draufsicht, und
- Fig. 9: eine Gegenüberstellung zweier mehrkreisiger Heizanlagen, die mit dem erfindungsgemäßen Mehrwegemischventil verschaltet sind oder nach derzeit bekannter Verschaltung.

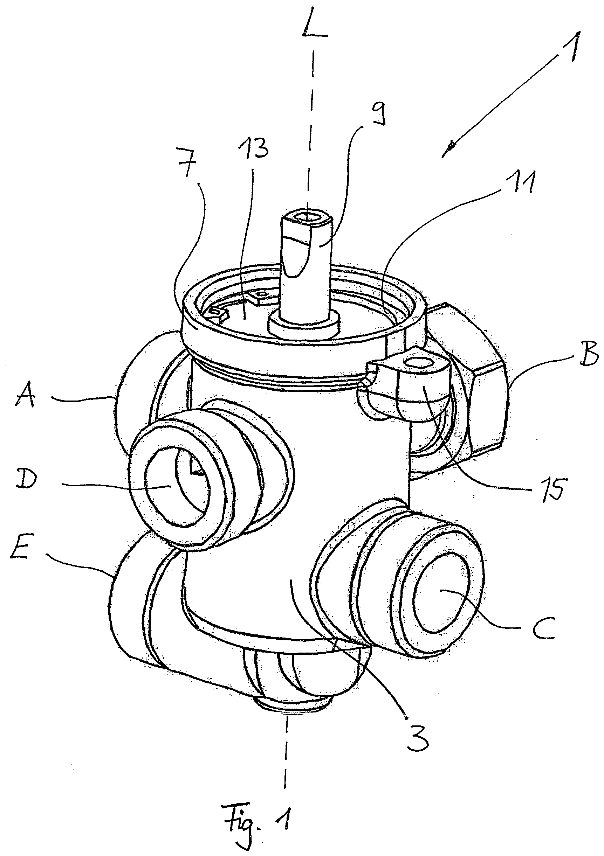

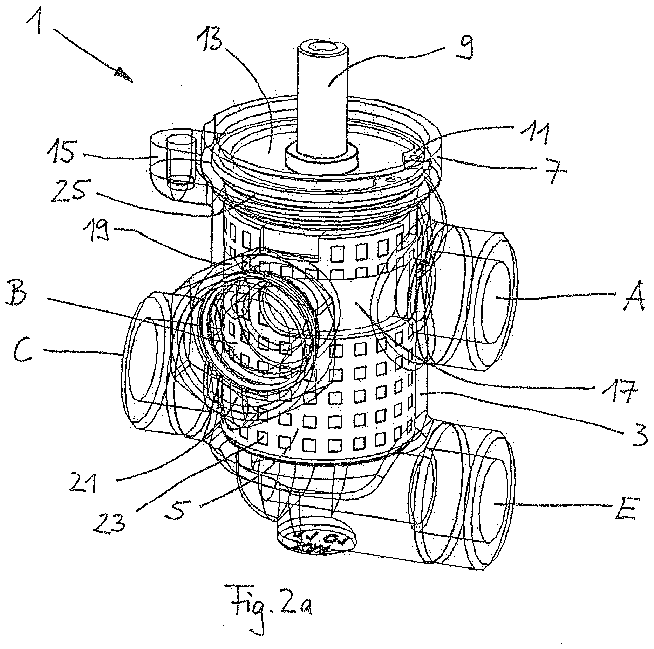

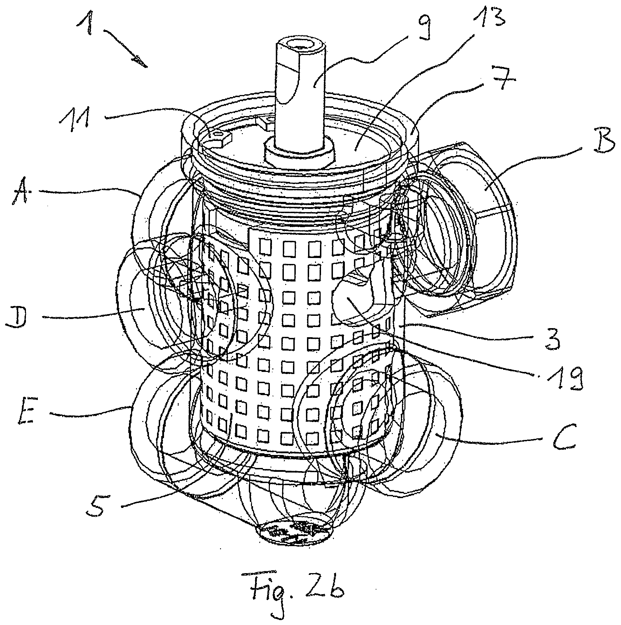

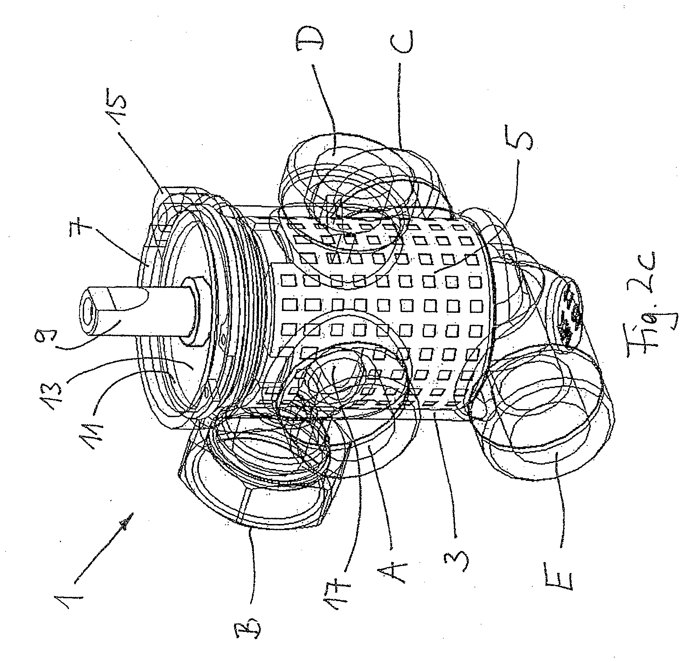

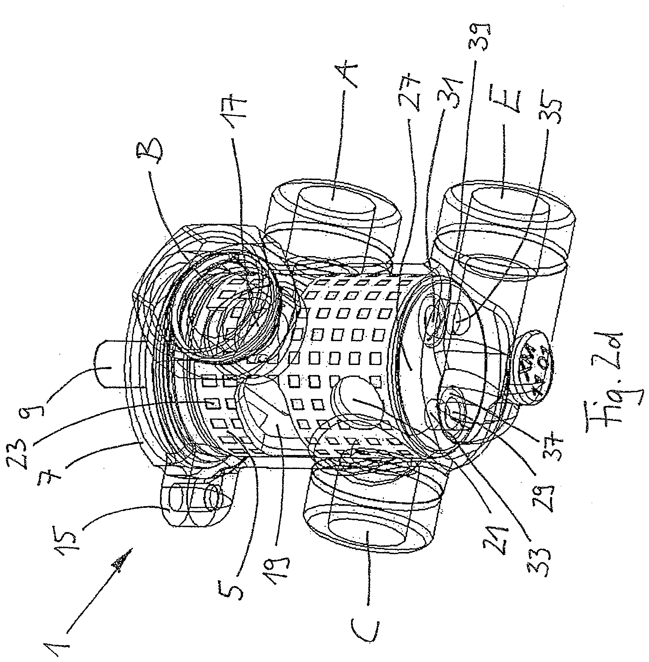

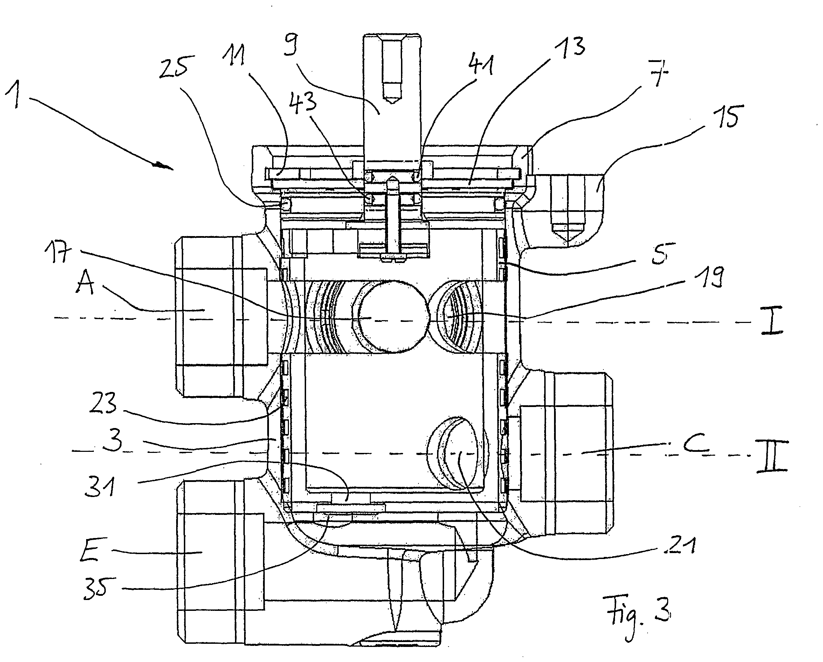

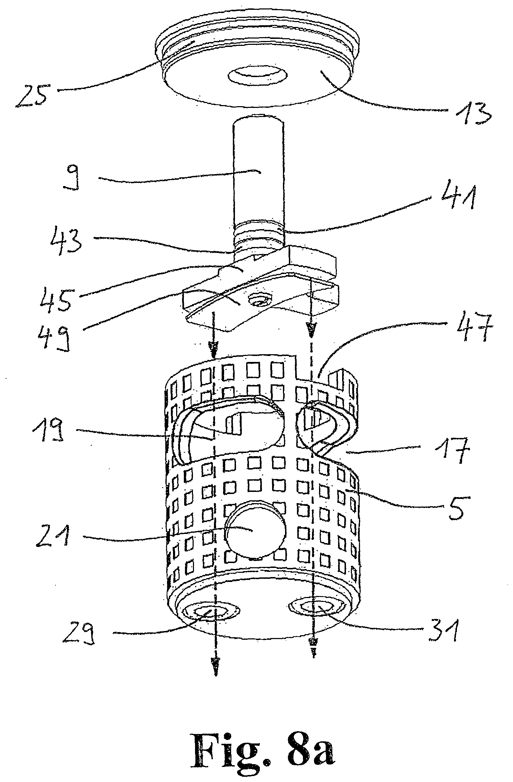

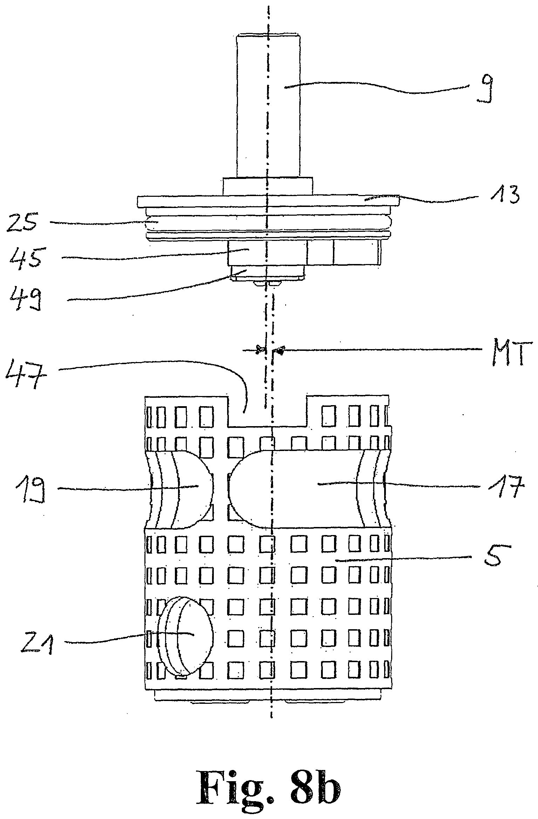

In den Fig. 1 bis Fig. 3 und 8a, 8b ist eine erste bevorzugte Ausgestaltung des erfindungsgemäßen Mehrwegemischventils 1 dargestellt, wobei Fig. 1 eine perspektivische Gesamtschau zeigt, die Fig. 2a bis 2d teiltransparente perspektivische Darstellungen zeigen und in Fig. 3 eine Querschnittsansicht gezeigt ist. In Fig. 8a, 8b ist eine Explosionsdarstellung für das Zusammenwirken bestimmter Teil gezeigt.

Es ist zu erkennen, dass das Mehrwegemischventil 1 ein im Wesentlichen hohlzylindrisch ausgebildetes Gehäuse 3 aufweist, an dem fünf verschiedene Anschlüsse A, B, C, D, E angeordnet sind. Im Inneren des Gehäuses 3 ist ein Schaltelement 5 vorgesehen, das ebenfalls hohlzylindrisch ausgebildet ist. An dem Gehäuse 3 ist ein Kragen 7 vorgesehen, an dem ein mittels eines Sprengringes 11 gehaltenes Abdeckelement 13 angeordnet ist, wobei durch das Abdeckelement 13 eine Antriebswelle 9 zur Betätigung des Schaltelementes 5 durchgeführt ist. Das Gehäuse 3 weist außerdem eine auskragend angeordnete Schraubverbindungsaufnahme 15 auf, an der die Verdrehsicherung (nicht gezeigt) eines mit der Antriebswelle 9 verbundenen Stellantriebs (nicht gezeigt) angeordnet wird. Dadurch wird eine starre Verbindung bereit gestellt, die verhindert, dass sich der Stellantrieb um die eigene Stellachse drehen kann.

Das Schaltelement 5 weist verschiedene Strömungskanäle 17, 19, 21, 29, 31 auf, die korrespondierend zu den Anschlüssen A, B, C, D, E angeordnet sind. Die drei ersten Anschlüsse A, B, D und die dazu korrespondierenden Strömungskanäle 17, 19 sind dabei in einer ersten Schaltebene I ausgebildet. Dabei ist der Anschluss A zentral angeordnet und jeweils um 90° gegen den Uhrzeigersinn bzw. im Uhrzeigersinn versetzt sind die Anschlüsse D bzw. B angeordnet. Die zugehörigen Strömungskanäle 17, 19 sind als Langlochdurchbrechungen im Schaltelement 5 ausgebildet und erstrecken sich jeweils über einen Winkelbereich von 90° bzw. 45°, so dass wahlweise die Anschlüsse A und B oder die Anschlüsse B und D miteinanderverbindbar sind. Die Höhe bzw. die Außenradien der Langlochströmungskanäle 17, 19 stimmen mit den jeweiligen Innendurchmessern der Anschlüsse A, B, D, die am Schaltelement 5 anliegen, überein. Der Langlochströmungskanal 17 erstreckt sich dabei über einen Umfangswinkelbereich von 90° und der Langlochströmungskanal 19 erstreckt sich dabei über einen Umfangswinkelbereich von 45°. Zwischen den beiden Langlochströmungskanälen 17, 19 ist ein Steg vorgesehen, der nur so breit ausgeführt ist, dass er das Schaltelement 5 konstruktiv abstützt und dabei noch nicht strömungstechnisch beeinträchtigt. Anstelle der beiden getrennt ausgebildeten Langlochströmungskanäle 17, 19 könnte auch ein einzelner Langlochströmungskanal vorgesehen werden, der sich dann über einen Umfangswinkelbereich von ca. 135° erstreckt.

In einer ersten Schaltungsebene II der zweiten Schaltungsebenen ist der erste der zweiten Anschlüsse, Anschluss C, zusammen mit dem damit kommunizierenden Strömungskanal 21 angeordnet. Dieser Strömungskanal 21 ist als kreisförmige Durchbrechung im Schaltelement 5 ausgebildet, wobei dessen Durchmesser so bemessen ist, dass er mit dem Innendurchmesser des Anschlusses C am Schaltelement 5 übereinstimmt. Der Strömungskanal 21 ist in Bezug auf die Längsachse L des Mehrwegemischventils 1 unterhalb des Strömungskanals 19 angeordnet, wobei der zum Langlochströmungskanal 17 weisende Außenradius des Langlochströmungskanals 19 mit dem Umfang des Strömungskanals 21 in Bezug auf die Längsachse L fluchtet.

Im Boden 27 des Schaltelements 5, der zum Anschluss E weist, sind zwei gegenüberliegend angeordnete Strömungskanäle 29, 31 vorgesehen, die mit korrespondierenden Anschlussöffnungen 33, 35 des Anschlusses E eine dritte Schaltungsebene ausbilden. Die Durchmesser der Strömungskanäle 29, 31 stimmen dabei wiederum mit den Durchmessern der zugehörigen Anschlussöffnungen 33, 35 überein, wobei die jeweilige Summe der Öffnungsflächen der Strömungskanäle 29, 31 bzw. der Anschlussöffnungen 33, 35 identisch ist zur Öffnungsfläche des Strömungskanals 21 bzw. der Anschlüsse A, B, C, D und die in die Langlochströmungskanäle 17, 19 einbeschriebene Öffnungsfläche. Die Durchmesser der Strömungskanäle 29, 31 sind dabei so gehalten, dass Zwischenstellungen des Schaltelements 5 vorhanden sind, in denen die Kommunikation zwischen den Strömungskanälen 29, 31 und den Anschlussöffnungen 33, 35 unterbunden ist.

Um einen verschleißfreien und dabei abgedichteten Lauf des Stellelements 5 im Gehäuse 3 zu ermöglichen, ist das Stellelement 5 mit einer EPDM beschichteten Oberfläche versehen und weist zusätzlich rasterartig angeordnete, Reibung vermindernde quadratische Vertiefungen 23 auf. Zur weiteren Abdichtung der Anschlüsse A, B, C, D gegenüber dem Schaltelement 5 sind die Anschlüsse A, B, C, D umgebende Dichtringe (nicht gezeigt) vorgesehen und bezüglich des Anschlusses E sind die Strömungskanäle 29, 31 im Boden 27 des Schaltelements 5 von Dichtringen 37, 39 umgeben. Weiterhin ist ein Dichtring 25 zur Abdichtung des Gehäuses 3 vorgesehen und die Durchführung der Antriebswelle 9 ist gegenüber dem Abdeckelement 13 mittels Dichtringen 41, 43 fluiddicht abgedichtet.

In den Fig. 1 bis 3 ist eine Stellung des Schaltelements 5 gegenüber dem Gehäuse 3 gezeigt, mit der ein Mischzustand verwirklicht ist, bei dem die Anschlüsse A und B der ersten Schaltebene I miteinander kommunizieren und die restlichen Anschlüsse C, D, E gesperrt sind, also in keiner Fluid führenden Kommunikation stehen (dies stellt den Mischzustand a) dar).

Dadurch, dass das Schaltelement durch Drehung der Antriebswelle 9 im Uhrzeigersinn (von oben auf den Deckel 7 schauend) bewegt wird, können dann die weiteren Mischzustände b) bis f) sukzessive durchlaufen werden, wobei die Mischzustände a) bis e) innerhalb einer Drehung um 90° durchlaufen werden und Mischzustand f), also die vollständige Kommunikation zwischen den Anschlüssen D und E, bei der Anschluss D maximal mit Strömungskanal 19 geöffnet ist und die Anschlussöffnungen 33, 35 maximal mit den korrespondierenden Strömungskanälen 29, 31 geöffnet sind, nach 135° erreicht ist.

Zur Verhinderung einer Drehung gegen den Uhrzeigersinn von Mischzustand a) aus, wodurch eine Verbindung der Anschlüsse A, B, C, E ermöglicht würde, können ein mechanischer Anschlag (nicht gezeigt) bspw. auf der Antriebswelle 9 oder ein Endlagenschalter (nicht gezeigt) eines Antriebsmotors (nicht gezeigt) vorgesehen sein. Gleichfalls können zur Verhinderung eines Weiterdrehens im Uhrzeigersinn über den Mischzustand f) hinaus ebenfalls ein entsprechender mechanischer Anschlag (nicht gezeigt) bspw. auf der Antriebswelle 9 oder ein entsprechender Endlagenschalter (nicht gezeigt) eines Antriebsmotors (nicht gezeigt) vorgesehen sein.

Aus der in Fig. 8a, 8b gezeigten Explosionsdarstellung bezüglich des Zusammenwirkens von Schaltelement 5, Antriebswelle 9 und Abdeckelement 13 wird deutlich, dass zwischen dem Abdeckelement 13 und Antriebswelle 9 auf der einen Seite und Schaltelement 5 auf der anderen Seite ein Loslager besteht, mit dem Maßtoleranzen bzw. Achsabweichungen (MT) zwischen den Komponenten 5, 9, 13 ausgeglichen werden. Diesbezüglich ist die an der Antriebswelle 9 angeordnete Kreuzaufnahme 45 gegenüber den korrespondierenden Ausnehmungen 47 am Schaltelement 5 untermaßig ausgeführt. Außerdem ist ein als Blattfeder 49 ausgebildetes Federelement an der Kreuzaufnahme 45 vorgesehen, das die notwendige Dichtkraft für die Abdichtung der der Strömungskanäle 29, 31 gegenüber dem Gehäuse 3 durch anpressen der Dichtringe 37, 39 (in Fig. 8a nicht gezeigt) an das Gehäuse 3 bereitstellt.

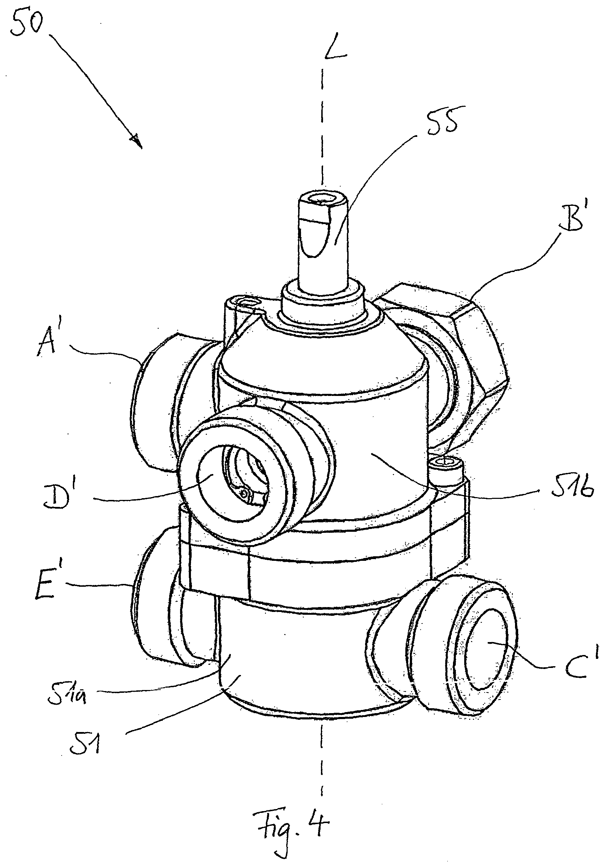

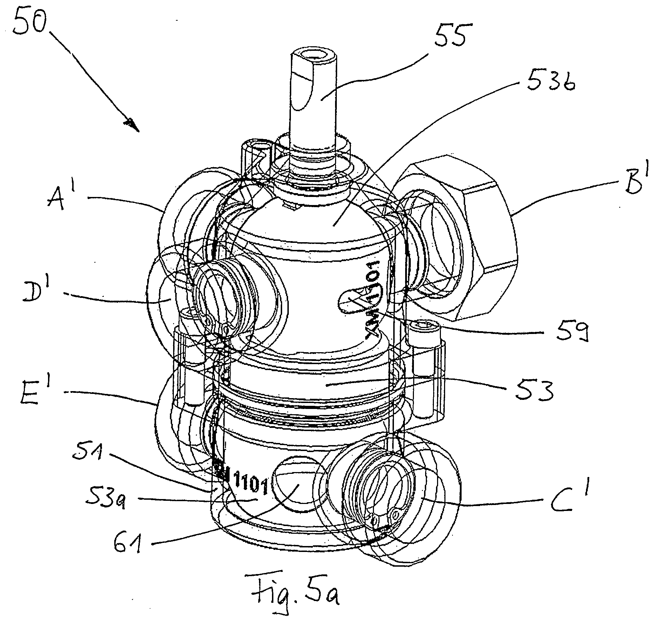

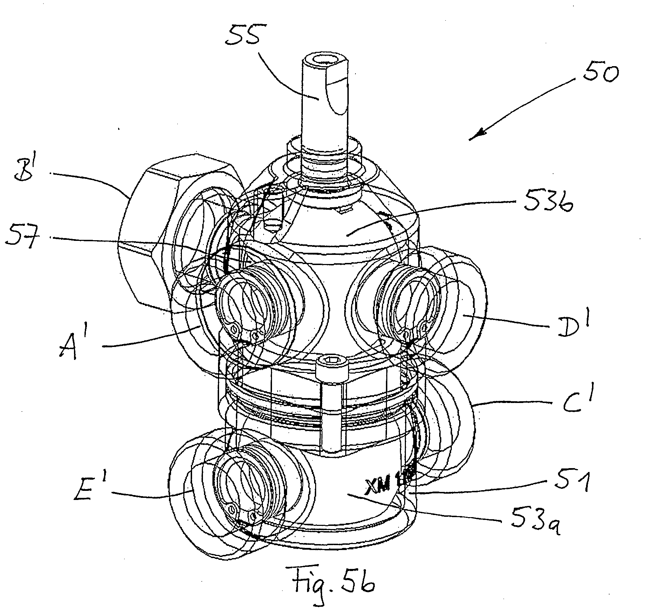

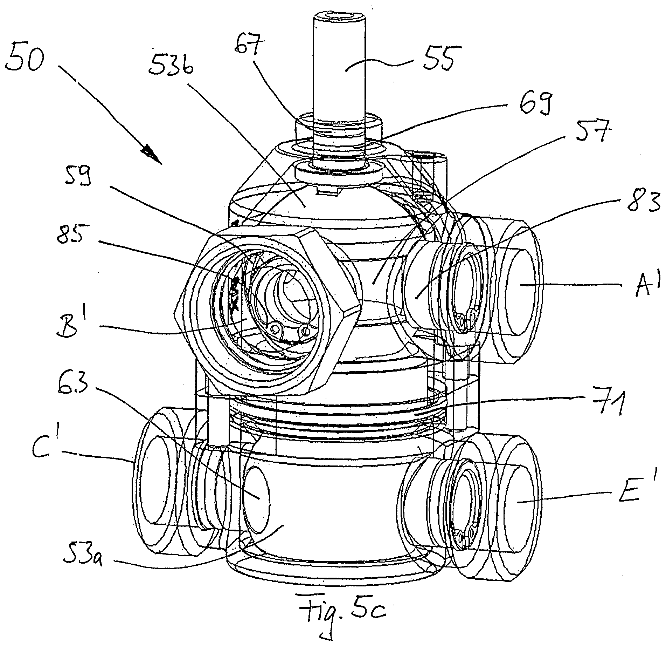

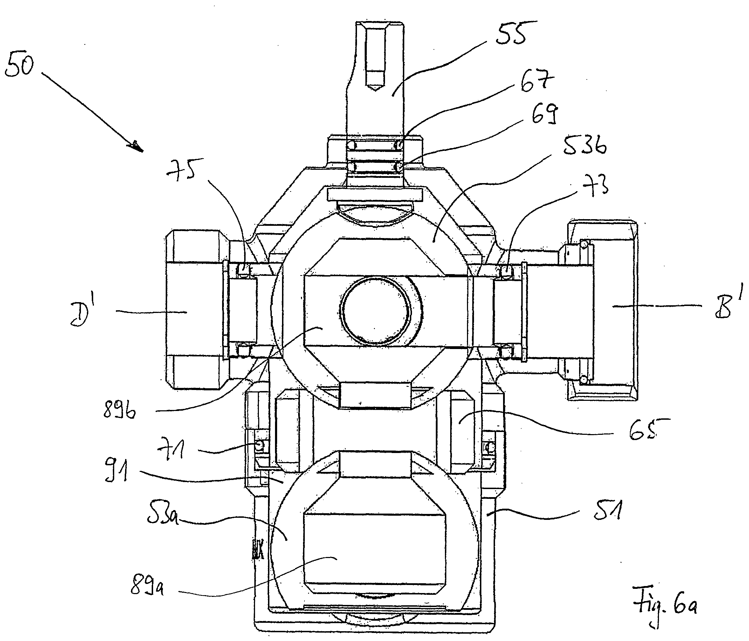

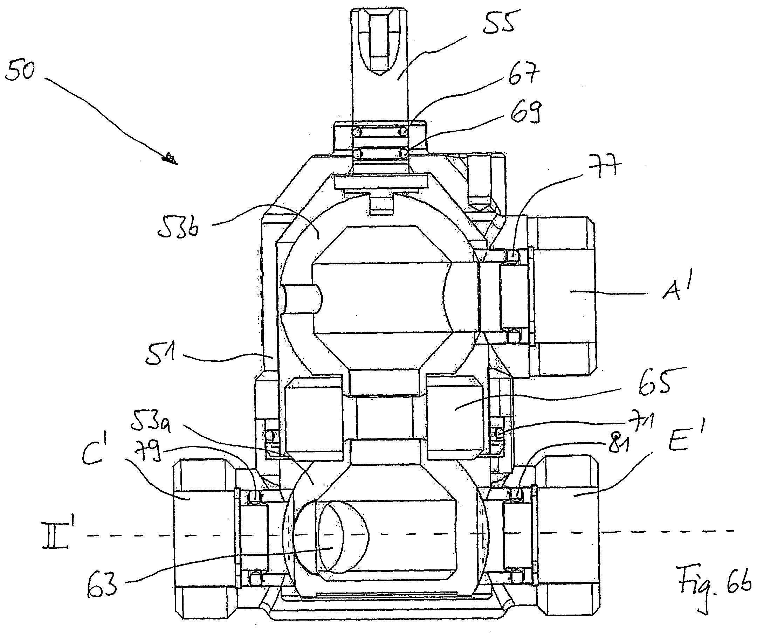

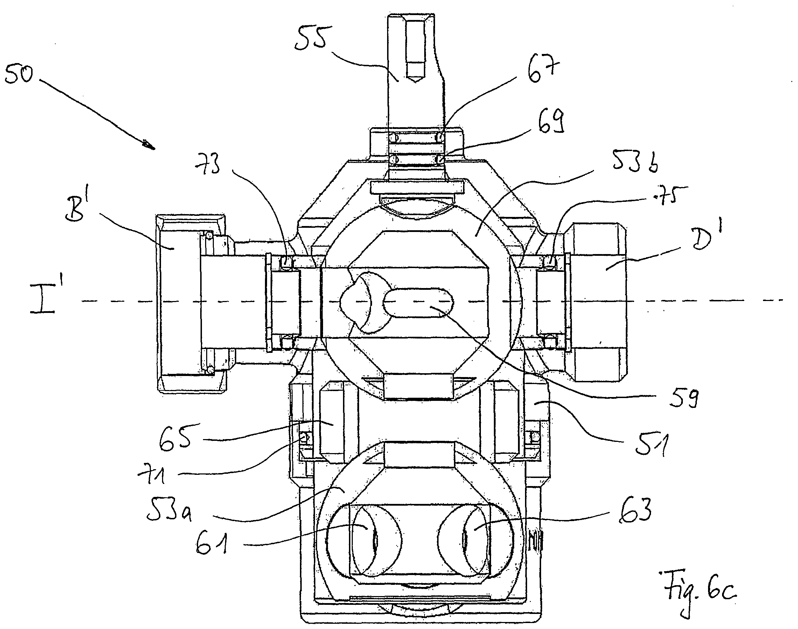

In den Fig. 4 bis Fig. 6c ist eine zweite bevorzugte Ausführungsform des erfindungsgemäßen Mehrwegemischventils 50 in verschiedenen Ansichten dargestellt. Dabei zeigt Fig. 4 eine perspektivische Gesamtschau, die Fig. 5a bis Fig. 5c zeigen teiltransparente perspektivische Ansichten und die Fig. 6a bis 6c zeigen verschiedene Schnittansichten dieses Mehrwegemischventils 50.

Es ist zu erkennen, dass dieses Mehrwegemischventil 50 ein Gehäuse 51 aufweist, das zweiteilig mit einem unteren Gehäuseteil 51a und einem oberen Gehäuseteil 51b aufgebaut ist. Im Inneren des Gehäuses 51 ist ein Stellelement 53 angeordnet, das aus zwei Kugelhalbschalen 53a, 53b besteht, die mit Hilfe des Verbindungselementes 65 so verbunden sind, dass die Innenräume 89a, 89b der Kugelhalbschalen 53a, 53b in fluider Kommunikation stehen. Durch das Gehäuse 51 ist eine Antriebswelle 55 zum Antrieb des Schaltelementes 53 durchgeführt. Auch hier können mechanische Anschläge (nicht gezeigt) bspw. auf der Antriebswelle 55 oder ein Endlagenschalter (nicht gezeigt) eines Antriebsmotors (nicht gezeigt) vorgesehen sein.

In der oberen Halbkugelschale 53b sind zwei als Langlöcher ausgebildete Strömungskanäle 57, 59 ausgebildet, die sich wiederum jeweils über einen Winkelbereich von 90° bzw. 45° erstrecken. Der Langlochströmungskanal 59 ist im Vergleich zum Langlochströmungskanal 57 mit geringerer Höhe ausgebildet. Diese Dimensionierung ist vorteilhaft, wenn zu erwarten ist, dass das durch den Langlochströmungskanal 59 geführte Wärmemedium eine höhere Medientemperatur aufweist, so dass dann zur Herstellung der warmen Mischung nur relativ geringe Mengen heißen Mediums und größere Mengen kalten Mediums benötigt werden.

In der unteren Halbkugelschale 53a sind zwei kreisförmige Strömungskanäle 61, 63 vorgesehen, die um einen Winkel von 90° versetzt zueinander angeordnet sind. Der eine Strömungskanal 63 ist dabei wiederum in Bezug auf die Längsachse L' fluchtend mit dem zum Langlochströmungskanal 57 weisenden Außenradius des Langlochströmungskanals 59 ausgerichtet.

Das Gehäuse 51 ist nach außen hin durch die Ringdichtungen 67, 69 und 71 abgedichtet. Zusätzlich weist jeder Anschluss A', B', C', D', E' einen Zylindereinsatz 83 auf, der mit Hilfe eines Sprengringes 58 befestigt ist und jeweils mittels der Dichtungsringe 73, 75, 77, 79, 81 gegenüber dem Gehäuse 51 abgedichtet ist. Diese Zylindereinsätze 83, die beispielsweise aus PTFE gefertigt sind, liegen abdichtend an den jeweiligen Kugelhalbschalen 53a, 53b an und verhindern einen ungewünschten Übertritt von Fluid aus dem jeweiligen Anschluss A', B', C', D', E' in einen anderen Anschluss A', B', C', D', E'. In dem zwischen Gehäuse 51 und Schaltelement 53 ausgebildeten Zwischenraum 91 befindet sich Fluid.

Es ist zu erkennen, dass dieses erfindungsgemäße Mehrwegemischventil 50 zwei Schaltebenen I', II' aufweist, wobei sich in der ersten Schaltebene die Anschlüsse A', B', D' und die korrespondierenden Langlochströmungskanäle 57, 59 befinden, während sich in der zweiten Schaltebene II' die Anschlüsse C', E' und die korrespondierenden Strömungskanäle 61, 63 befinden.

Es ist zu erkennen, dass bei beiden Mehrwegemischventilen 1, 50 eine sehr reibungsarme Lagerung der Schaltelemente 5, 53 in den Gehäusen 3, 51 besteht und dabei durch die verwendeten Abdichtungen dennoch sehr wirksam ein Fluidübertritt zwischen nicht verschalteten Anschlüssen besteht, so dass auch bei kurzzeitig auftretenden hohen Drücken kein Fluid übertritt.

Die genaue Bemaßung der Mehrwegemischventile 1, 50 richtet sich nach den jeweiligen Leitungsklassen und den gewünschten Mediendurchsätzen und kann vom Fachmann entsprechend angepasst werden.

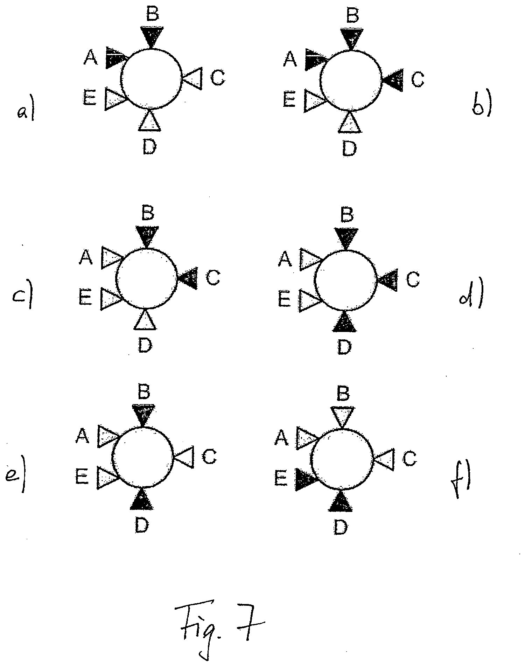

In Fig. 7 sind die Mischzustände a) bis f) des erfindungsgemäßen Mehrwegemischventils 1, 50 schematisch dargestellt. Diese Mischzustände a) bis f) werden durch sukzessives Drehen des Schaltelements 5, 53 im Uhrzeigersinn von der Ausgangsstellung a) hin zur Endstellung f) durchlaufen. Diese Verstellung mittels der Antriebswellen 9, 55 erfolgt entweder manuell, oder es ist ein entsprechender Antriebsmotor (nicht gezeigt) vorzusehen. Dabei wird, wie oben schon dargestellt, keine vollständige Drehung des Schaltelements 5, 53 gegenüber dem Gehäuse 3, 51 vollzogen, sondern ausgehend von einer Anschlagstellung in Mischzustand a) eine Drehung über einen Winkelbereich von 135° hin zur Anschlagstellung in Mischzustand f).

Mit Hilfe der schwarz ausgefüllten Dreiecke sind diejenigen Anschlüsse bezeichnet, die in direkter fluider Kommunikation miteinander stehen. Dabei sind in Fig. 7 nur die Anschlüsse A, B, C, D, E des Mehrwegemischventils 1 angegeben, der Übersichtlichkeit halber jedoch nicht diejenigen A', B', C', D', E' des Mehrwegemischventils 50.

Es ist zu erkennen, dass in Mischzustand a) die Anschlüsse A und B direkt miteinander kommunizieren, während keine Kommunikation mit den Anschlüssen C, D und E stattfindet.

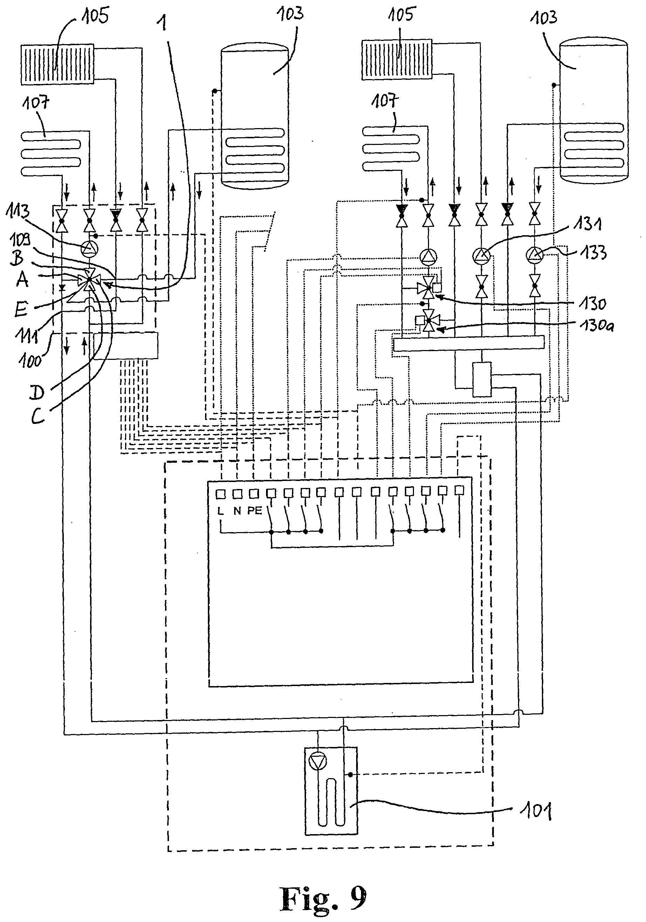

Wenn also beispielsweise im Rahmen einer Verschaltung 100, wie sie in Fig. 9 auf der linken Seite beispielhaft für eine Wärmequelle 101, einen Warmwasserspeicher 103, eine Heizkörperheizung in einem ungemischten Heizkreis 105 und eine Fußbodenheizung 107 in einem gemischten Heizkreis gezeigt ist, dass Mehrwegemischventil 1 so angeschlossen ist, dass
- Anschluss A mit dem Rücklauf der Fußbodenheizung 107,
- Anschluss B mit dem Vorlauf der Fußbodenheizung 107,
- Anschluss C mit dem Rücklauf der Heizkörperheizung 105, dem Rücklauf des Warmwasserspeichers 103 und dem Rücklauf der Fußbodenheizung 107 mit Hilfe der Knotenpunkte 109, 111 verbunden ist,
- Anschluss D mit dem Vorlauf aus der Wärmequelle 101 und
- Anschluss E mit dem Vorlauf des Wärmespeichers 103 verbunden sind und
- der Wärmequellevorlauf parallel mit dem Vorlauf der Fußbodenheizung 107 und der Wärmequellenrücklauf parallel mit dem Rücklauf der Fußbodenheizung 107 verbunden sind, dann würde im Fall des Mischzustandes a) das Wärmemedium nur von Anschluss A nach Anschluss B strömen, das heißt es würde ein geschlossener hydraulischer Kreis für die Fußbodenheizung 107 bestehen, dem kein Medium zugeführt wird und der gegebenenfalls mittels der Pumpe 113 sukzessive ausgekühlt wird. Hier gibt es keine Wärmeanforderung in dem gemischten Heizkreis, aber eine Wärmeanforderung in dem ungemischten Heizkreis.

Bei Mischzustand b) sind die Anschlüsse A, B und C miteinander verbunden, so dass Wärmemedium von Anschluss A nach Anschluss B strömen und zusätzlich Anschluss B auch von Anschluss C Wärmemedium zugeführt wird. Der Medienstrom aus Anschluss B ist somit die Summe der Medienströme aus den Anschlüssen A und C, es wird also der Fußbodenheizung 107 sukzessive Wärmemedium aus dem ungemischten Heizkreis mit der Heizkörperheizung 103 zugeführt, wodurch eine externe Medienzumischung erfolgt. Hier gibt es sowohl Wärmeanforderung in dem gemischten als auch in dem ungemischten Heizkreis. Dieser Zustand b) wird eingesetzt, wenn die Rücklauftemperatur des ungemischten Heizkreises größer ist als die Rücklauftemperatur des gemischten Heizkreises.

Bei Mischzustand c) stehen nur die Anschlüsse B und C in Kommunikation, wodurch Wärmemedium von Anschluss C nach Anschluss B strömt. Hier wird also dem Anschluss B Wärmemedium aus dem Rücklauf der Heizkörperheizung 105 über den Knotenpunkt 109 zugemischt. Hier gibt es sowohl Wärmeanforderung in dem gemischten als auch in dem ungemischten Heizkreis. Dieser Zustand c) wird eingesetzt, wenn die Rücklauftemperatur des ungemischten Heizkreises mit der Vorlauftemperatur des gemischten Heizkreises übereinstimmt.

Bei Mischzustand d) befinden sich die Anschlüsse B, C und D in fluider Kommunikation untereinander. In diesem Fall strömt Wärmemedium von Anschluss C nach Anschluss B und auch von Anschluss D nach Anschluss B. Bei Anschluss B ergibt sich also eine Mischmenge aus den zugespeisten Medienströmen der Anschlüsse C und D. Hier gibt es sowohl Wärmeanforderung in dem gemischten als auch in dem ungemischten Heizkreis. Dieser Zustand d) wird eingesetzt, wenn die Rücklauftemperatur des ungemischten Heizkreises kleiner ist kleiner als die Vorlauftemperatur des gemischten Heizkreises, so dass Wärmemedium aus der Wärmequelle 101 dem gemischten Heizkreis zugemischt wird.

Bei Mischzustand e) sind nur die Anschlüsse B und D miteinander verschaltet, während die Anschlüsse A, C und E geschlossen sind. In diesem Fall strömt das Medium von Anschluss D zu B, das heißt der gemischte Heizkreis wird ausschließlich über die Wärmequelle 101 versorgt, während im ungemischten Heizkreis keine Medienanforderung besteht. Hier ist die Vorlauftemperatur des gemischten Heizkreises gleich der Temperatur des Verlaufs der Wärmequelle 101.

Schließlich ist bei Mischzustand f) eine direkte Kommunikation der Anschlüsse D und E geschaltet, so dass Medium von Anschluss D nach Anschluss E strömt. Hierdurch kann eine Vorrangschaltung der Beladung des Warmwasserspeichers 103 aus der Wärmequelle 101 verwirklicht werden, nämlich dann, wenn entweder sowohl für den gemischten Kreis 107 als auch für den ungemischten Kreis 105 keine Medienanforderung besteht oder aktuell eine Warmwasseranforderung besteht. Das im Warmwasserspeicher 103 gespeicherte warme Wasser kann dann im Bedarfsfall dem Warmwasserspeicher 103 entnommen werden.

In Fig. 9 ist auf der rechten Seite eine üblicherweise verwendete Verschaltung dargestellt, mit der die gleichen Mischzustände verwirklicht werden können. Es ist zu erkennen, dass die alternative Ausgestaltung ohne Fünfwegemischventil 1 zwei Dreiwegemischventile 130, 130a erfordert und zumindest die zusätzlichen zwei Umwälzpumpen 131, 133 sowie entsprechende Steuerungen notwendig sind, wodurch diese Schaltung sehr kompliziert und kostenaufwendig aufgebaut ist. Im Gegensatz dazu reicht bei der links dargestellten erfindungsgemäßen Verschaltung die Umwälzpumpe 113, um zusammen mit der Heizquellenumwälzpumpe den ungemischten Heizkreis 103, den gemischten Heizkreis 107 bzw. den Warmwasserspeicherheizkreis 103 mit Wärmeträgermedium bedarfsweise zu versorgen. Außerdem ist über die Einbindung des Warmwasserspeicherheizkreises 103 über das Fünfwegemischventil 129 die zusätzliche Vorsehung von Absperrventilen in diesem Warmwasserspeicherheizkreises 103 nicht notwendig.

Insgesamt ist also festzustellen, dass mit dem erfindungsgemäßen Mehrwegemischventil 1, 50 sich eine wesentlich einfachere, kompaktere und damit auch kostengünstigere hydraulische Verschaltung einer Wärmequelle 101 mit drei Wärmesenken 103, 105, 107 erreichen lässt.

Aber auch für zahlreiche weitere Anwendungsfälle, bspw. der Verschaltung eines gemischten Heizkreises mit einer Wärmequelle und einem Pufferspeicher (nicht gezeigt), lässt sich das erfindungsgemäße Mehrwegemischventil 1, 50 vorteilhaft einsetzen.

## Patentansprüche

1. Mehrwegemischventil (1; 50) für Warmwasserbereitungs- und/oder Heizungssysteme mit einem Ventilgehäuse (3; 51) und zumindest fünf Anschlüssen (A, B, C, D, E), die über ein im Ventilgehäuse (3; 51) gelagertes Schaltelement (5; 53), das Strömungskanäle (17, 19, 21, 29, 31; 57, 59, 61, 63) aufweist, miteinander verbindbar sind, wobei drei erste Anschlüsse (A, B, D) einer ersten Schaltebene (I; I') des Schaltelements (5; 53) zugeordnet sind und zwei zweite Anschlüsse (C, E) einer oder mehrerer von der ersten Schaltebene (I; I') abweichenden zweiten Schaltebenen (II; II') des Schaltelements (5; 53) zugeordnet sind, **dadurch gekennzeichnet, dass**
das Schaltelement (5; 53) in Zusammenhang mit den Anschlüssen (A, B, C, D, E) so ausgebildet ist, dass durch Drehen des Schaltelements (5; 53) um zumindest einen Winkelbereich einer Drehachse (L; L') folgende Mischzustände angesteuert, bevorzugt sukzessive angesteuert werden können:
a) Verbinden eines ersten (A) der ersten Anschlüsse mit einem zweiten (B) der ersten Anschlüsse,
b) gleichzeitige Verbindung des ersten (A) der ersten Anschlüsse mit dem zweiten (B) der ersten Anschlüsse und eines ersten (C) der zweiten Anschlüsse mit dem zweiten (B) der ersten Anschlüsse,
c) Verbinden des ersten (C) der zweiten Anschlüsse mit dem zweiten (B) der ersten Anschlüsse,
d) gleichzeitiges Verbinden des ersten (C) der zweiten Anschlüsse mit dem zweiten (B) der ersten Anschlüsse und eines dritten (D) der ersten Anschlüsse mit dem zweiten (B) der ersten Anschlüsse,
e) Verbinden des dritten (D) der ersten Anschlüsse mit dem zweiten (B) der ersten Anschlüsse und
f) Verbinden des dritten (D) der ersten Anschlüsse mit einem zweiten (E) der zweiten Anschlüsse, wobei für das Schaltelement (5; 53) eine erste Anschlagstellung ausgebildet ist, in der der Mischzustand a) vorliegt, und/oder eine zweite Anschlagstellung ausgebildet ist, in der der Mischzustand f) vorliegt, wodurch eine Verschaltung von drei Wärmesenken mit einer Wärmequelle erzielbar ist, wobei sich mit dem Mischzustand f) eine Vorrangschaltung zur ausschließlichen Beschickung eines Wärmespeichers verwirklichen lässt, wobei in diesem Fall keine Zumischung zu den anderen Wärmesenken vorgenommen wird.

2. Mehrwegemischventil (1; 50) nach Anspruch 1, **dadurch gekennzeichnet, dass** die ersten drei Anschlüsse (A, B, D) um 90° versetzt zueinander in der ersten Schaltebene (I; I') angeordnet sind.

3. Mehrwegemischventil (1; 50) nach Anspruch 1 oder 2, **dadurch gekennzeichnet, dass** zumindest einer der zweiten Anschlüsse (C) in Bezug auf die Projektion der ersten Schaltebene (I; I') nicht mit einem der drei ersten Anschlüsse (A, B, D) fluchtet, insbesondere um 90° versetzt zu den drei ersten Anschlüssen (A, B, D) angeordnet ist, und/oder dass die zweiten Anschlüsse (61, 63) in einer einheitlichen zweiten Schaltungsebene (II') des Schaltelements (53) angeordnet sind.

4. Mehrwegemischventil (1) nach einem der vorherigen Ansprüche, **dadurch gekennzeichnet, dass** das Schaltelement (5) bereichsweise Vertiefungen (23) gegenüber dem Ventilgehäuse (3) aufweist, die bevorzugt musterartig angeordnet und insbesondere in Form von Parallelogrammen ausgebildet sind und/oder dass das Schaltelement (5) eine Beschichtung zur Reibungsverminderung aufweist, wobei die Beschichtung bevorzugt einen synthetischen Kautschuk aufweist, und insbesondere als EPDM-Beschichtung ausgebildet ist.

5. Mehrwegemischventil (1; 50) nach einem der vorherigen Ansprüche, **dadurch gekennzeichnet, dass** zumindest zwei erste Strömungskanäle (17, 19; 57, 59) den drei ersten Anschlüssen (A, B, D) zugeordnet sind, wobei die zwei Strömungskanäle (17, 19; 57, 59) so ausgebildet sind, dass sie jeweils zwei der drei ersten Anschlüsse (A, B, D) gleichzeitig überdecken können, und/oder dass das Schaltelement (5; 53) als ggf. ein- oder beidseitig geschlossenes hohlzylindrisches Element ausgebildet ist oder als zwei miteinander verbundene kugelschalenartige Elemente (53a, 53b).

6. Mehrwegemischventil (5) nach einem der vorherigen Ansprüche, **dadurch gekennzeichnet, dass** zumindest einem Anschluss (E) zwei zweite Strömungskanäle (29, 31) zugeordnet sind, wobei der Anschluss (E) zumindest in einer Schaltstellung des Schaltelements (5) mit beiden Strömungskanälen (29, 31) gleichzeitig kommuniziert, wobei die beiden Strömungskanäle (29, 31) bevorzugt in einer Stirnfläche des Schaltelements (5) angeordnet sind.

7. Mehrwegemischventil (5) nach Anspruch 6, **dadurch gekennzeichnet, dass** die beiden Strömungskanäle (29, 31) in Summe zumindest dieselbe Querschnittsfläche aufweisen wie die Querschnittsfläche zumindest eines der ersten Anschlüsse (A, B, D), die bevorzugt jeweils dieselben Querschnittsflächen aufweisen.

8. Mehrwegemischventil (1; 50) nach einem der vorherigen Ansprüche, **dadurch gekennzeichnet, dass** für das Schaltelement (5; 53) eine erste Anschlagstellung ausgebildet ist, in der die Stellung a) vorliegt, und/oder eine zweite Anschlagstellung ausgebildet ist, in der die Stellung f) vorliegt, wobei die erste und zweite Anschlagstellung insbesondere über Endlagenschalter eines das Schaltelement (5; 53) antreibenden Motors verwirklicht sind.

9. Mehrwegemischventil (1; 50) nach Anspruch 8, **dadurch gekennzeichnet, dass** der Drehwinkel des Schaltelements (5; 53) zwischen den Mischzuständen a) und f) 135° beträgt, und bevorzugt ein Drehwinkel zwischen den Mischzuständen a) und e) von 90° und ein Drehwinkel zwischen den Mischzuständen e) und f) von 45° vorgesehen sind.

10. Verfahren zum zeitlichen Steuern der Verbindung von fünf Fluid führenden (A, B, C, D, E) Anschlüssen untereinander in einem Mehrwegemischventil (1; 50) für Warmwasserbereitungs- und/oder Heizungssysteme, wobei das Mehrwegemischventil (1; 50) ein Ventilgehäuse (3; 51) und zumindest fünf Anschlüssen (A, B, C, D, E) besitzt, die über ein im Ventilgehäuse (3; 51) gelagertes Schaltelement (5; 53), das Strömungskanäle (17, 19, 21, 29, 31; 57, 59, 61, 63) aufweist, miteinander verbindbar sind, wobei drei erste Anschlüsse (A, B, D) einer ersten Schaltebene (I; I') des Schaltelements (5; 53) zugeordnet sind und zwei zweite Anschlüsse (C, E) einer oder mehrerer von der ersten Schaltebene (I; I') abweichenden zweiten Schaltebenen (II; II') des Schaltelements (5; 53) zugeordnet sind, **gekennzeichnet durch** folgende mögliche Schritte:
h) Verbinden eines ersten (A) der ersten Anschlüsse mit einem zweiten (B) der ersten Anschlüsse,
i) gleichzeitige Verbindung des ersten (A) der ersten Anschlüsse mit dem zweiten (B) der ersten Anschlüsse und eines ersten (C) der zweiten Anschlüsse mit dem zweiten (B) der ersten Anschlüsse,
k) Verbinden des ersten (C) der zweiten Anschlüsse mit dem zweiten (B) der ersten Anschlüsse,
l) gleichzeitiges Verbinden des ersten (C) der zweiten Anschlüsse mit dem zweiten (B) der ersten Anschlüsse und eines dritten (D) der ersten Anschlüsse mit dem zweiten (B) der ersten Anschlüsse,
m) Verbinden des dritten (D) der ersten Anschlüsse mit dem zweiten (B) der ersten Anschlüsse und
n) Verbinden des dritten (D) der ersten Anschlüsse mit einem zweiten (E) der zweiten Anschlüsse, wobei für das Schaltelement (5; 53) eine erste Anschlagstellung ausgebildet ist, in der der Schritt h) vorliegt, und/oder eine zweite Anschlagstellung ausgebildet ist, in der der Schritt n) vorliegt, wodurch eine Verschaltung von drei Wärmesenken mit einer Wärmequelle erzielbar ist, wobei sich mit dem Schritt n) eine Vorrangschaltung zur ausschließlichen Beschickung eines Wärmespeichers verwirklichen lässt, wobei in diesem Fall keine Zumischung zu den anderen Wärmesenken vorgenommen wird.

11. Verfahren nach Anspruch 10, **dadurch gekennzeichnet, dass** das Mehrwegemischventil (1; 50) nach einem der Ansprüche 1 bis 9 ausgebildet wird.

## Claims

1. Multiway mixing valve (1; 50) for hot water preparation systems and/or heating systems comprising a valve housing (3; 51) and at least five connections (A, B, C, D, E), which are connectable to one another via a switching element (5; 53), which is supported in the valve housing (3; 51) and comprises flow channels (17, 19, 21, 29, 31; 57, 59, 61, 63), wherein three first connections (A, B, D) are associated with a first switching level (I; I') of the switching element (5; 53) and two second connections (C, E) are associated with one or more second switching levels (II; II') of the switching element (5; 53) that differ from the first switching level (I; I'), **characterised in that**
the switching element (5; 53) is formed in conjunction with the connections (A, B, C, D, E) such that by rotating the switching element (5; 53) about at least one angular range of an axis of rotation (L; L'), the following mixed states can be triggered, preferably successively triggered:
a) connection of a first (A) of the first connections to a second (B) of the first connections,
b) simultaneous connection of the first (A) of the first connections to the second (B) of the first connections and of a first (C) of the second connections to the second (B) of the first connections,
c) connection of the first (C) of the second connections to the second (B) of the first connections,
d) simultaneous connection of the first (C) of the second connections to the second (B) of the first connections and of a third (D) of the first connections to the second (B) of the first connections,
e) connection of the third (D) of the first connections to the second (B) of the first connections and
f) connection of the third (D) of the first connections to a second (E) of the second connections, wherein a first stop position is formed for the switching element (5; 53), in which position the mixed state a) is present, and/or a second stop position is formed in which the mixed state f) is present, whereby interconnection of three heat sinks with a heat source can be achieved, wherein with the mixed state f) priority switching can be realised for the exclusive charging of a heat store, wherein in this case no admixture to the other heat sinks is undertaken.

2. Multiway mixing valve (1; 50) according to claim 1, **characterised in that** the first three connections (A, B, D) are arranged offset by 90° to one another in the first switching level (I; I').

3. Multiway mixing valve (1; 50) according to claim 1 or 2, **characterised in that** with regard to the projection of the first switching level (I; I'), at least one of the second connections (C) is not in line with one of the first three connections (A, B, D), is arranged in particular offset by 90° to the three first connections (A, B, D), and/or that the second connections (61, 63) are arranged in a uniform second switching level (II') of the switching element (53).

4. Multiway mixing valve (1) according to any one of the preceding claims, **characterised in that** the switching element (5) comprises depressions (23) in areas relative to the valve housing (3), which are preferably arranged pattern-like and are formed in particular in the shape of parallelograms and/or that the switching element (5) comprises a coating to reduce friction, wherein the coating preferably comprises a synthetic rubber, and is formed in particular as an EPDM coating.

5. Multiway mixing valve (1; 50) according to any one of the preceding claims, **characterised in that** at least two first flow channels (17, 19; 57, 59) are associated with the three first connections (A, B, D), wherein the two flow channels (17, 19; 57, 59) are formed such that they can each cover two of the three first connections (A, B, D) simultaneously, and/or that the switching element (5; 53) is formed if applicable as a hollow cylindrical element that is closed on one or both sides or as two spherical-shell-like elements (53a, 53b) connected to one another.

6. Multiway mixing valve (5) according to any one of the preceding claims, **characterised in that** two second flow channels (29, 31) are associated with at least one connection (E), wherein the connection (E) communicates simultaneously with both flow channels (29, 31) at least in one switching position of the switching element (5), wherein the two flow channels (29, 31) are preferably arranged in an end face of the switching element (5).

7. Multiway mixing valve (5) according to claim 6, **characterised in that** the two flow channels (29, 31) have at least the same cross-sectional area in total as the cross-sectional area at least of one of the first connections (A, B, D), which preferably each have the same cross-sectional areas.

8. Multiway mixing valve (1; 50) according to any one of the preceding claims, **characterised in that** formed for the switching element (5; 53) is a first stop position, in which the position a) is present, and/or a second stop position is formed in which the position f) is present, wherein the first and second stop position are realised in particular via end position switches of a motor driving the switching element (5; 53).

9. Multiway mixing valve (1; 50) according to claim 8, **characterised in that** the angle of rotation of the switching element (5; 53) between the mixed states a) and f) is 135°, and preferably an angle of rotation between the mixed states a) and e) of 90° and an angle of rotation between the mixed states e) and f) of 45° are provided.

10. Method for time control of the connection of five fluid-carrying (A, B, C, D, E) connections to one another in a multiway mixing valve (1; 50) for hot water preparation systems and/or heating systems, wherein the multiway mixing valve (1; 50) comprises a valve housing (3; 51) and at least five connections (A, B, C, D, E), which are connectable to one another via a switching element (5; 53), which is supported in the valve housing (3; 51) and comprises flow channels (17, 19, 21, 29, 31; 57, 59, 61, 63), wherein three first connections (A, B, D) are associated with a first switching level (I; I') of the switching element (5; 53) and two second connections (C, E) are associated with one or more second switching levels (II; II') of the switching element (5; 53) that differ from the first switching level (I; I'), **characterised by** the following possible steps:
h) connection of a first (A) of the first connections to a second (B) of the first connections,
i) simultaneous connection of the first (A) of the first connections to the second (B) of the first connections and of a first (C) of the second connections to the second (B) of the first connections,
k) connection of the first (C) of the second connections to the second (B) of the first connections,
I) simultaneous connection of the first (C) of the second connections to the second (B) of the first connections and of a third (D) of the first connections to the second (B) of the first connections,
m) connection of the third (D) of the first connections to the second (B) of the first connections and
n) connection of the third (D) of the first connections to a second (E) of the second connections, wherein a first stop position is formed for the switching element (5; 53), in which position the step h) is present, and/or a second stop position is formed in which the step n) is present, whereby interconnection of three heat sinks with a heat source can be achieved, wherein with the step n) priority switching can be realised for the exclusive charging of a heat store, wherein in this case no admixture to the other heat sinks is undertaken.

11. Method according to claim 10, **characterised in that** the multiway mixing valve (1; 50) according to any one of claims 1 to 9 is formed.

## Revendications

1. Vanne mélangeuse multivoie (1 ; 50) pour systèmes de préparation d'eau chaude et/ou de chauffage, comprenant un boîtier de vanne (3 ; 51) et au moins cinq raccordements (A, B, C, D, E), qui peuvent être reliés les uns aux autres par le biais d'un élément de commutation (5 ; 53) monté dans le boîtier de vanne (3 ; 51), qui comporte des canaux d'écoulement (17, 19, 21, 29, 31 ; 57, 59, 61, 63), trois premiers raccordements (A, B, D) étant associés à un premier plan de commutation (I; I') de l'élément de commutation (5 ; 53) et deux deuxièmes raccordements (C, E) étant associés à un ou plusieurs deuxièmes plans de commutation (II ; II') de l'élément de commutation (5 ; 53) qui sont différents du premier plan de commutation (I ; I'), **caractérisée en ce que**
l'élément de commutation (5 ; 53) est conçu en lien avec les raccordements (A, B, C, D, E) de telle manière que, en tournant l'élément de commutation (5 ; 53) sur au moins une plage angulaire d'un axe de rotation (L; L'), les états de mélange suivants peuvent être commandés, de préférence commandés successivement :
a) raccordement d'un premier (A) des premiers raccordements à un deuxième (B) des premiers raccordements,
b) raccordement simultané du premier (A) des premiers raccordements au deuxième (B) des premiers raccordements et d'un premier (C) des deuxièmes raccordements au deuxième (B) des premiers raccordements,
c) raccordement du premier (C) des deuxièmes raccordements au deuxième (B) des premiers raccordements,
d) raccordement simultané du premier (C) des deuxièmes raccordements au deuxième (B) des premiers raccordements et d'un troisième (D) des premiers raccordements au deuxième (B) des premiers raccordements,
e) raccordement du troisième (D) des premiers raccordements au deuxième (B) des premiers raccordements et
f) raccordement du troisième (D) des premiers raccordements à un deuxième (E) des deuxièmes raccordements, une première position de butée étant réalisée pour l'élément de commutation (5 ; 53), dans laquelle on a l'état de mélange a), et/ou une deuxième position de butée étant réalisée, dans laquelle on a l'état de mélange f), moyennant quoi un raccordement de trois dissipateurs thermiques à une source de chaleur peut être obtenu, l'état de mélange f) permettant de réaliser une priorité de commutation pour alimenter exclusivement un accumulateur de chaleur, cas dans lequel aucun ajout n'est effectué dans les autres dissipateurs thermiques.

2. Vanne mélangeuse multivoie (1 ; 50) selon la revendication 1, **caractérisée en ce que** les trois premiers raccordements (A, B, D) sont disposés dans le premier plan de commutation (I ; I') avec un décalage entre eux de 90°.

3. Vanne mélangeuse multivoie (1; 50) selon la revendication 1 ou 2, **caractérisée en ce qu'**au moins un des deuxièmes raccordements (C) n'est pas aligné avec un des trois premiers raccordements (A, B, D) par rapport à la projection du premier plan de commutation (I ; I'), et est en particulier disposé avec un décalage de 90° par rapport aux trois premiers raccordements (A, B, D), et/ou **en ce que** les deuxièmes raccordements (61, 63) sont disposés dans un même deuxième plan de commutation (II') de l'élément de commutation (53).

4. Vanne mélangeuse multivoie (1) selon l'une des revendications, précédentes, **caractérisée en ce que** l'élément de commutation (5) comporte, dans certaines zones, des creux (23) par rapport au boîtier de vanne (3), qui sont disposés de préférence selon un motif et qui sont réalisés en particulier en forme de parallélogrammes et/ou **en ce que** l'élément de commutation (5) comporte un revêtement pour réduire les frottements, le revêtement comportant de préférence un caoutchouc synthétique, et étant réalisé en particulier sous la forme d'un revêtement en EPDM.

5. Vanne mélangeuse multivoie (1 ; 50) selon l'une des revendications précédentes, **caractérisée en ce qu'**au moins deux premiers canaux d'écoulement (17, 19 ; 57, 59) sont associés aux trois premiers raccordements (A, B, D), les deux canaux d'écoulement (17, 19 ; 57, 59) étant conçus de telle sorte qu'ils peuvent respectivement recouvrir simultanément deux des trois premiers raccordements (A, B, D), et/ou **en ce que** l'élément de commutation (5 ; 53) est conçu sous la forme d'un élément cylindrique creux fermé le cas échéant d'un ou des deux côtés ou sous la forme de deux éléments (53a, 53b) de type coque sphérique raccordés l'un à l'autre.

6. Vanne mélangeuse multivoie (5) selon l'une des revendications précédentes, **caractérisée en ce que** deux deuxièmes canaux d'écoulement (29, 31) sont associés à au moins un raccordement (E), le raccordement (E) communiquant, au moins dans une position de commutation de l'élément de commutation (5), simultanément avec les deux canaux d'écoulement (29, 31), les deux canaux d'écoulement (29, 31) étant de préférence disposés dans une surface frontale de l'élément de commutation (5).

7. Vanne mélangeuse multivoie (5) selon la revendication 6, **caractérisée en ce que** les deux canaux d'écoulement (29, 31) présentent au total au moins la même aire de section transversale que l'aire de section transversale d'au moins un des premiers raccordements (A, B, D), qui présentent de préférence respectivement la même aire de section transversale.

8. Vanne mélangeuse multivoie (1 ; 50) selon l'une des revendications précédentes, **caractérisée en ce qu'**une première position de butée est réalisée pour l'élément de commutation (5 ; 53), dans laquelle on a la position a), et/ou une deuxième position de butée est réalisée, dans laquelle on a la position f), la première et la deuxième position de butée étant en particulier réalisées par le biais d'interrupteurs de fin de course d'un moteur entraînant l'élément de commutation (5 ; 53).

9. Vanne mélangeuse multivoie (1 ; 50) selon la revendication 8, **caractérisée en ce que** l'angle de rotation de l'élément de commutation (5 ; 53) entre les états de mélange a) et f) est de 135°, et un angle de rotation entre les états de mélange a) et e) de 90° et un angle de rotation entre les états de mélange e) et f) de 45° étant de préférence prévus.

10. Procédé de commande temporelle du raccordement de cinq raccordements (A, B, C, D, E) conducteurs de fluide les uns aux autres dans une vanne mélangeuse multivoie (1 ; 50) pour systèmes de préparation d'eau chaude et/ou de chauffage, la vanne mélangeuse multivoie (1 ; 50) possédant un boîtier de vanne (3 ; 51) et au moins cinq raccordements (A, B, C, D, E), qui peuvent être reliés les uns aux autres par le biais d'un élément de commutation (5 ; 53) monté dans le boîtier de vanne (3 ; 51), qui comporte des canaux d'écoulement (17, 19, 21, 29, 31; 57, 59, 61, 63), trois premiers raccordements (A, B, D) étant associés à un premier plan de commutation (I; I') de l'élément de commutation (5 ; 53) et deux deuxièmes raccordements (C, E) étant associés à un ou plusieurs deuxièmes plans de commutation (II ; II') de l'élément de commutation (5 ; 53) qui sont différents du premier plan de commutation (I ; I'), **caractérisé par** les étapes possibles suivantes :
h) raccordement d'un premier (A) des premiers raccordements à un deuxième (B) des premiers raccordements,
i) raccordement simultané du premier (A) des premiers raccordements au deuxième (B) des premiers raccordements et d'un premier (C) des deuxièmes raccordements au deuxième (B) des premiers raccordements,
k) raccordement du premier (C) des deuxièmes raccordements au deuxième (B) des premiers raccordements,
I) raccordement simultané du premier (C) des deuxièmes raccordements au deuxième (B) des premiers raccordements et d'un troisième (D) des premiers raccordements au deuxième (B) des premiers raccordements,
m) raccordement du troisième (D) des premiers raccordements au deuxième (B) des premiers raccordements et
n) raccordement du troisième (D) des premiers raccordements à un deuxième (E) des deuxièmes raccordements, une première position de butée étant réalisée pour l'élément de commutation (5 ; 53), dans laquelle on a l'étape h), et/ou une deuxième position de butée étant réalisée, dans laquelle on a l'étape n), moyennant quoi un raccordement de trois dissipateurs thermiques à une source de chaleur peut être obtenu, l'étape n) permettant de réaliser une priorité de commutation pour alimenter exclusivement un accumulateur de chaleur, cas dans lequel aucun ajout n'est effectué dans les autres dissipateurs thermiques.

11. Procédé selon la revendication 10, **caractérisé en ce que** la vanne mélangeuse multivoie (1; 50) est réalisée selon l'une des revendications 1 à 9.
